# EUROPÄISCHE PATENTANMELDUNG

(11) **EP 2 128 048 A1**
(43) Veröffentlichungstag der Anmeldung: **02.12.2009**
(21) Anmeldenummer: 08009616.7
(22) Anmeldetag: 27.05.2008
(51) Int. Cl.: B65G 13/075, F16D 59/00

(54) **Bremsrolleneinsatz, Bremsrolle und Rollenbahn**

(71) Anmelder: Werner Langer GmbH & Co. Metall- und Kunststoffverarbeitung, 59872 Meschede (DE)
(72) Erfinder: Schulze-Berge, Otto, Dipl.-Ing, 59071 Hamm (DE)
(74) Vertreter: Brune, Axel

(57) **Zusammenfassung**

Bremsrolleneinsatz (1), insbesondere für eine Bremsrolle einer Rollenbahn, umfassend einen hohlzylinderförmigen Trommelkörper (2), eine Bremseinrichtung (5), ein Getriebe und eine Achse (6), wobei der Trommelkörper (2) dazu eingerichtet ist, um die Achse (3) zu rotieren, wobei das Getriebe dazu eingerichtet ist, die Bremseinrichtung (5) durch die Drehbewegung des Trommelkörpers (2) anzutreiben, wobei die Bremseinrichtung (5) dazu eingerichtet ist, die Drehbewegung zwischen Trommelkörper (2) und Achse (3) in Abhängigkeit von der Drehzahl zwischen Trommelkörper (2) und Achse (3) zu verzögern, wobei die Bremseinrichtung (5) mit Bremssegmenten ausgestattet ist, die dazu eingerichtet sind, unter dem Einfluss von Fliehkraft mit dem Trommelkörper (2) in Kontakt zu treten, wobei mindestens drei, vorzugsweise vier, Bremssegmente (23, 24, 25, 26) vorgesehen sind, sowie Bremsrolle (100) für eine Rollenbahn (200), umfassend einen Bremsrolleneinsatz (1) und einen hohlzylinderförmigen Rollenkörper (101), wobei es sich bei dem Bremsrolleneinsatz um einen Bremsrolleneinsatz (1) gemäß einem der Ansprüche 1 bis 13 handelt, sowie Rollenbahn (200) zum Transport von Transportgut, insbesondere von Paletten oder Containern, umfassend einen Rollenrahmen (202), in dem eine Anzahl von Rollen (201) und mindestens eine Bremsrolle aufgenommen sind, wobei es sich um eine Bremsrolle (100) gemäß Anspruch 14 handelt.

## Beschreibung

Die vorliegende Erfindung betrifft einen Bremsrolleneinsatz gemäß dem Oberbegriff des Anspruchs 1, ein Bremsrolleneinsatz für eine Rollenbahn gemäß dem Oberbegriff des Anspruchs 14, sowie eine Rollenbahn gemäß dem Oberbegriff des Anspruchs 15.

Ein Bremsrolleneinsatz ist in der Regel Teil einer Bremsrolle für eine Rollenbahn für Paletten oder ähnliches Transportgut. Eine Bremsrolle wiederum umfasst im Wesentlichen einen hohlzylinderförmigen Rollenkörper, in dem mindestens ein Bremsrolleneinsatz aufgenommen ist. Eine Rollenbahn für Paletten wiederum umfasst im Wesentlichen einen Tragrahmen, in dem in der Regel Rollen und Bremsrollen parallel zueinander und drehbar angeordnet sind. Es können auch ausschließlich Bremsrollen in dem Tragrahmen angebracht sein, üblich ist es jedoch, nur einige Bremsrollen zwischen den Rollen anzuordnen, so dass das auf der Rollenbahn zu transportierende Gut mit mindestens einer Bremsrolle in Kontakt ist, während es auf der Rollenbahn transportiert wird. Die Bremsrolle hat in diesem Zusammenhang die Aufgabe, einen auf einer geneigt angeordneten Rollenbahn (Schwerkraft-Rollenbahn) abrollenden Gegenstand, z.B. eine Palette, auf möglichst gleichbleibende Abroll-Geschwindigkeit abzubremsen.

Zur Erfüllung dieser Aufgabe weist die Bremsrolle einen Bremsrolleneinsatz auf, wobei der Bremsrolleneinsatz einen hohlzylinderförmigen Trommelkörper, eine Achse, ein Getriebe und eine Bremseinrichtung aufweist.

Der Trommelkörper ist in den hohlzylinderförmigen Rollenkörper verdrehfest eingepresst. Die Achse ist mit dem Tragrahmen verbunden. Der Trommelkörper ist dazu eingerichtet um die Achse zu rotieren. Das Getriebe ist dazu eingerichtet, die Drehbewegung zwischen dem Trommelkörper und der Achse in eine Drehbewegung der Bremseinrichtung umzusetzen. Die Bremseinrichtung ist, in Abhängigkeit von der Drehzahl des Trommelkörpers um die Achse, dazu eingerichtet, die Drehbewegung zwischen Trommelkörper und Achse zu verzögern.

Zu diesem Zweck weist eine Bremseinrichtung gemäß dem Stand der Technik eine Bremssegmentaufnahmescheibe sowie zwei drehbar an der Bremssegmentaufnahmescheibe angelenkte Bremssegmente auf. Die Bremssegmentaufnahmescheibe umfasst zwei Zapfen, die von der Bremssegmentaufnahmescheibe hervorstehen und jeweils zur gelenkigen Anbindung eines Bremssegmentes eingerichtet sind. Ein Bremssegment umfasst insbesondere ein Fliehgewicht und eine Bremsbacke. Die Bremssegmente werden von einer Rückhalte-Zugfeder in einer ersten Position gehalten, bei der die Bremsbacken der Bremssegmente nicht mit dem Trommelkörper in Kontakt treten können. Die Bremssegmentaufnahmescheibe wird jedoch über ein Getriebe, vorzugsweise über ein Planetengetriebe, in Drehung versetzt, sobald sich der Trommelkörper um die Achse dreht. Ab Überschreiten einer vorbestimmbaren Drehzahl der Bremssegmentaufnahmescheibe ist die Fliehkraft der Fliehgewichte groß genug, um die Bremssegmente gegen die Federkraft der Rückhalte-Zugfeder in eine zweite Position zu bewegen, insbesondere zu verdrehen, bei der die Bremsbacken mit dem Trommelkörper, insbesondere mit einer dafür vorgesehenen Bremsfläche, in Kontakt treten können. Im Ergebnis wird die Drehung des Trommelkörpers um die Achse ab einer vorbestimmbaren Drehzahl des Trommelkörpers durch die Bremseinrichtung verzögert, so dass es möglich ist, eine auf der Bremsrolle transportierte Palette auf eine vorbestimmbare Geschwindigkeit abzubremsen.

Die aus dem Stand der Technik bekannten Bremsrolleneinsätze sind jedoch mit einigen Nachteilen behaftet. Durch den Anpressdruck der Bremsbacken gegen den Trommelkörper entsteht Wärme. Es ergibt sich eine relativ hohe Belastung des Bremsrolleneinsatzes, da die Temperatur innerhalb des Bremsrolleneinsatzes sehr stark ansteigt, wenn die Bremseinrichtung in kurzen zeitlichen Intervallen oder sogar dauerhaft beansprucht wird. Eine Dauerbelastung oder auch nur eine sehr häufige Aktivierung der Bremseinrichtung (Belastungszyklus) kann zu Beschädigungen beispielsweise der Bremsfläche des Trommelkörpers und/oder der Bremsbeläge führen. Andererseits kann der Bremsrolleneinsatz auch nicht beliebig groß gestaltet werden, um beispielsweise Flächen zur Wärmeabfuhr zu schaffen. Seine Abmessungen sind im Wesentlichen durch den hohlzylinderförmigen Rollenkörper der Bremsrolle vorgegeben.

Entsprechend liegt die Aufgabe der vorliegenden Erfindung darin, einen Bremsrolleneinsatz vorzuschlagen, der trotz kompakter Abmessungen hoch belastbar ist, insbesondere hohe Belastungszyklen ohne Beschädigungen aushalten kann.

Erfindungsgemäß wird diese Aufgabe durch einen Bremsrolleneinsatz mit den kennzeichnenden Merkmalen des Anspruchs 1 gelöst. Dadurch, dass die Bremseinrichtung mindestens über drei, vorzugsweise über vier Bremssegmente verfügt, ergeben sich zahlreiche Vorteile. Die Verwendung von mehr als zwei, insbesondere vier Bremssegmenten hat insbesondere den Vorteil, dass eine bessere Verteilung der durch den Anpressdruck der Bremsbacken gegen den Trommelkörper entstehenden Wärme stattfinden kann. Dadurch ergeben sich höhere Belastungszyklen der Bremsrolle, die gegenüber einer Ausführung mit nur zwei Bremssegmenten in etwa doppelt so hoch sind. Auch kann durch die erfindungsgemäß vorgeschlagene Maßnahme eine gleichmäßigere Verteilung der mechanischen Kräfte und eine kompakte Bauweise trotz höherer möglicher Bremskräfte erzielt werden. Auch ergibt sich eine Verschleißminderung trotz einer Erhöhung der Bremskräfte.

Weitere Vorteile der Erfindung ergeben sich durch die in den rückbezogenen Ansprüchen ausgeführten Merkmale.

Es kann beispielsweise in einer vorteilhaften Weiterbildung der vorgeschlagenen Erfindung vorgesehen sein, dass mindestens vier Zapfen auf der Bremssegmentaufnahmescheibe angebracht sind, wobei die Zapfen parallel zur Achse ausgerichtet sind, wobei die Bremssegmente drehbar an den Zapfen aufgenommen sind. Die drehbare Aufnahme der Bremssegmente um einen Zapfen bietet den Vorteil, dass sich relativ große Fliehgewichte an den Bremssegmenten installieren lassen, die eine große Bremskraft aufbringen können. Ferner können günstige Hebelverhältnisse ausgenutzt werden. Denkbar ist jedoch ebenfalls, die Bremssegmente in etwa radial verschiebbar auf der Bremssegmentaufnahmescheibe anzubringen.

Auch kann aus Gründen der Platzersparnis vorteilhafterweise vorgesehen sein, dass jeweils mindestens zwei Bremssegmente auf der einen Seite der Bremssegmentaufnahmescheibe angebracht sind, wobei jeweils mindestens zwei Bremssegmente auf der gegenüberliegenden Seite des Bremssegmentaufnahmescheibe angebracht sind. Auch durch diese Maßnahme wird der zur Verfügung stehende Bauraum optimal ausgenutzt.

Für einen ausgewogenen Rundlauf der Bremssegmentaufnahmescheibe kann vorteilhafterweise vorgesehen sein, dass die Zapfen derart auf der Bremssegmentaufnahmescheibe angebracht sind, dass in Umfangsrichtung alle 90° Grad ein Zapfen angebracht ist, wobei um 90° Grad versetzte Zapfen auf gegenüberliegenden Seiten der Bremssegmentaufnahmescheibe angebracht sind.

Auch ist es für eine kompakte Bauweise des Bremsrolleneinsatzes von Vorteil, dass es sich bei dem Getriebe um ein Planetengetriebe, vorzugsweise um eine Planetengetriebeanordnung aus zwei oder mehr Planetengetrieben, handelt. Insbesondere ein Planetengetriebe, vorzugsweise zwei in Reihe geschaltete Planetengetriebe, nutzen den zur Verfügung stehenden Bauraum optimal aus und ermöglichen hohe Übersetzungen, so dass die Bremseinrichtung auch bereits bei vergleichsweise geringen Drehzahlen des Trommelkörpers bzw. der Bremsrolle, einsetzen kann.

Unter dem Aspekt der einfachen Herstellung des Trommelkörpers kann vorteilhafterweise vorgesehen sein, dass der Trommelkörper mit einer Innenverzahnung ausgestattet ist, welche sowohl das Hohlrad des ersten Planetengetriebes, als auch das Hohlrad des zweiten Planetengetriebes bildet. Die Innenverzahnung kann beispielsweise über einen Längsabschnitt des Trommelkörpers vorgesehen sein, so dass trotz geringfügig unterschiedlicher Lage der Planetenräder in Längsrichtung der Achse sichergestellt sein kann, dass die Planetenräder mit dem Hohlrad, sprich der Innenverzahnung des Trommelkörpers in Eingriff stehen.

Eine vorteilhafte Ausgestaltung des Bremssegmentes kann dadurch gegeben sein, dass das Bremssegment einen Bremssegmentgrundkörper aufweist, bei dem die Bremsfläche näher an dem Zapfenanschluss angeordnet ist, als die mindestens eine Aussparung, wobei der Federanschluss auf dem dem Zapfenanschluss gegenüberliegenden Ende des Bremssegmentgrundkörpers vorgesehen ist. Eine derartige Ausgestaltung des Bremssegmentes bietet ebenfalls ein gutes Verhältnis zwischen Platzersparnis und Wirkungsgrad. Die durch die Fliehgewichte erzielbare Fliehkraft wird über ein vorteilhaftes Hebelverhältnis auf die Bremsbacke übertragen, indem der Hebel zwischen Fliehgewicht und Zapfenanschluss möglichst groß und zwischen Zapfenanschluss und Bremsbacke möglichst klein gehalten ist. Ferner kann zur Erzeugung einer vergleichsweise großen Rückstellkraft bzw. Rückstellmoment eine vergleichsweise kleine Rückhalte-Zugfeder eingesetzt werden, da der Hebel des gesamten Bremssegments zur Verfügung steht.

Ebenfalls zur Einsparung von Bauraum kann vorgesehen sein, dass die Planetenräder des zweiten Planetengetriebes schmaler ausgestaltet sind, als die Planetenräder des ersten Planetengetriebes. Durch diese Maßnahme kann der Bremsrolleneinsatz insbesondere kürzer ausgestaltet sein.

Eine weitere Aufgabe der vorliegenden Erfindung liegt darin, eine Bremsrolle für eine Rollenbahn, umfassend einen Bremsrolleneinsatz und einen hohlzylinderförmigen Rollenkörper, vorzuschlagen, die trotz kompakter Abmessungen hoch belastbar ist, insbesondere aber unanfälliger gegen hitzebedingte Schäden ist, die durch den Wärmeeintrag zwischen Bremsfläche und Bremsbacke entstehen können.

Erfindungsgemäß wird diese Aufgabe durch eine Bremsrolle mit den kennzeichnenden Merkmalen des Anspruchs 14 gelöst. Dadurch, dass ein erfindungsgemäßer Bremsrolleneinsatz in der Bremsrolle verwendet wird, kann insgesamt eine Bremsrolle bereitgestellt werden, welche sich durch eine hohe Belastbarkeit, insbesondere hohe mögliche Belastungszyklen auszeichnet, da die Bremswirkung nunmehr auf mehr als zwei Bremsbacken verteilt wird. Hierdurch ergibt sich eine geringerer Erwärmung der einzelnen Bremsbacken, wodurch wiederum die Gefahr, dass die Bremsrolle Schaden durch Hitzeeinwirkung erleidet, tendenziell gesenkt ist. Außerdem sind die Standzeiten einer derartigen Bremsrolle höher, da der Verschleiß des Bremsrolleneinsatzes gemindert ist.

Eine weitere Aufgabe der vorliegenden Erfindung liegt darin, eine Rollenbahn zum Transport von Transportgut, insbesondere von Paletten oder Containern, umfassend einen Rollenrahmen, in dem eine Anzahl von Rollen und mindestens eine Bremsrolle aufgenommen sind, vorzuschlagen, die sich durch ein hohes abzubremsendes Transportgutgewicht bei gleichbleibendem Bauraum auszeichnet.

Erfindungsgemäß wird diese Aufgabe durch eine Rollenbahn mit den kennzeichnenden Merkmalen des Anspruchs 15 gelöst. Dadurch, dass in der Rollenbahn mindestens eine Bremsrolle gemäß Anspruch 14 eingesetzt wird, können wesentlich höhere Lasten auf der Rollenbahn abgebremst werden, ohne dass es zu übermäßigem Verschleiß der Bremsrollen bzw. der Bremsrolleneinsätze kommen kann. Eine derartig ausgestaltete Rollenbahn ermöglicht beispielsweise eine einfache aber sichere Erhöhung des abzubremsenden Palettengewichts auf 1.500 kg und mehr.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: Ein Bremsrolleneinsatz gemäß dem Stand der Technik in einer perspektivischen und teilgeschnittenen Ansicht;

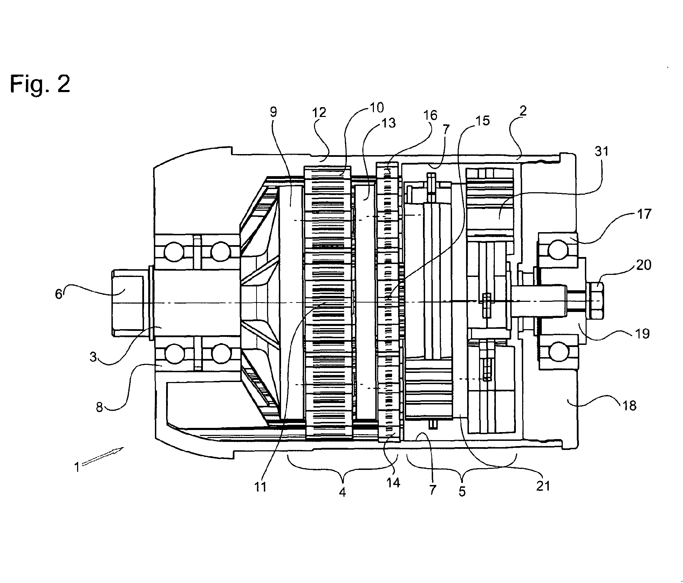

- Fig. 2: ein erfindungsgemäßer Bremsrolleneinsatz in einer seitlichen, teilweise geschnittenen Ansicht;

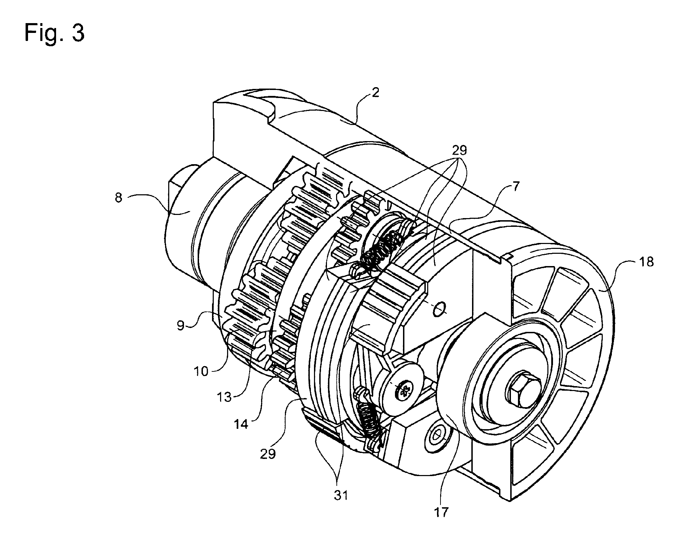

- Fig. 3: ein erfindungsgemäßer Bremsrolleneinsatz in einer perspektivischen, teilweise geschnittenen Ansicht;

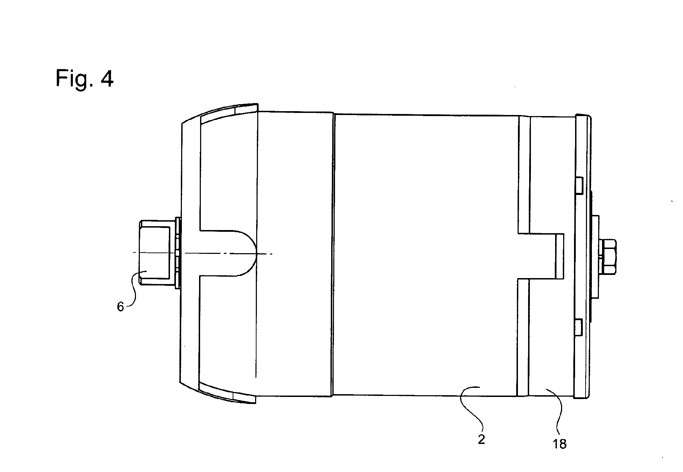

- Fig. 4: ein erfindungsgemäßer Bremsrolleneinsatz in einer seitlichen Ansicht;

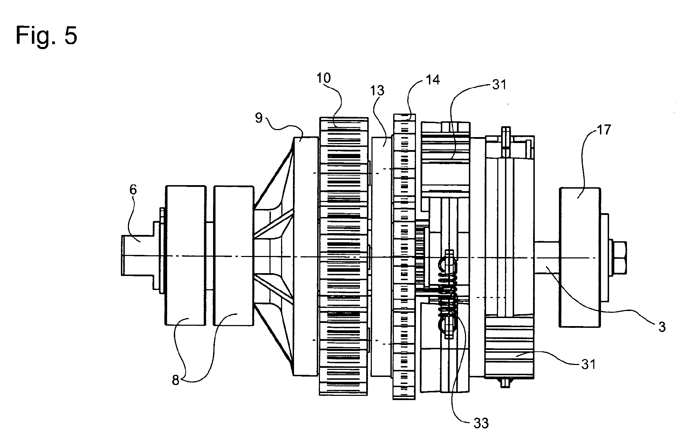

- Fig. 5: ein erfindungsgemäßer Bremsrolleneinsatz ohne Gehäuse;

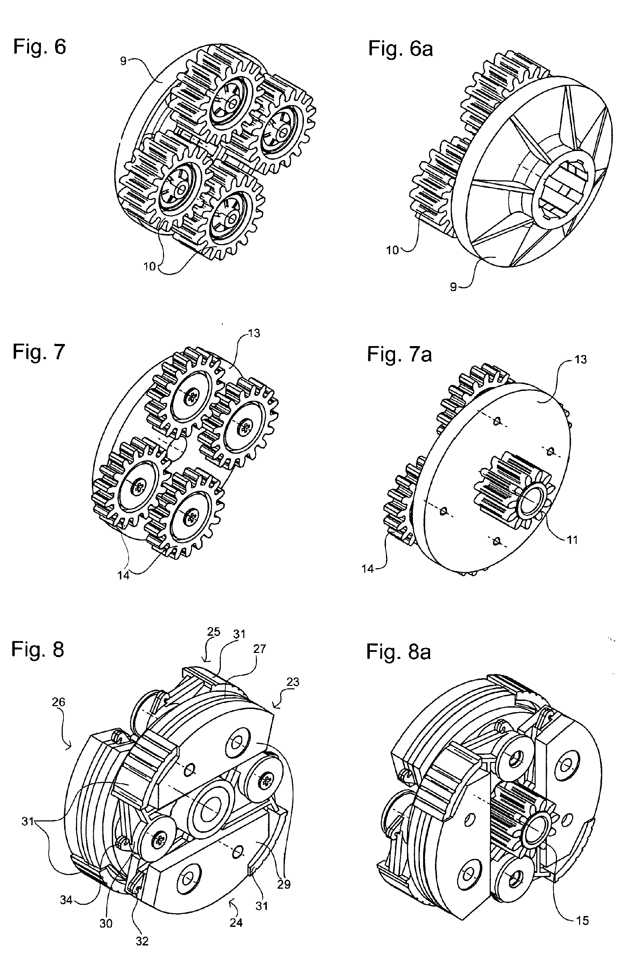

- Fig. 6: ein erstes Planetengetriebe (teilweise) eines erfindungsgemäßen Bremsrolleneinsatzes;
- Fig. 6a: ein erstes Planetengetriebe (teilweise) eines erfindungsgemäßen Bremsrolleneinsatzes (alternative Ansicht zu Fig. 6);
- Fig. 7: ein zweites Planetengetriebe (teilweise) eines erfindungsgemäßen Bremsrolleneinsatzes;
- Fig. 7a: ein zweites Planetengetriebe (teilweise) eines erfindungsgemäßen Bremsrolleneinsatzes (alternative Ansicht zu Fig. 7);
- Fig. 8: eine Bremseinrichtung eines erfindungsgemäßen Bremsrolleneinsatzes;
- Fig. 8a: eine Bremseinrichtung eines erfindungsgemäßen Bremsrolleneinsatzes (alternative Ansicht zu Fig. 8);

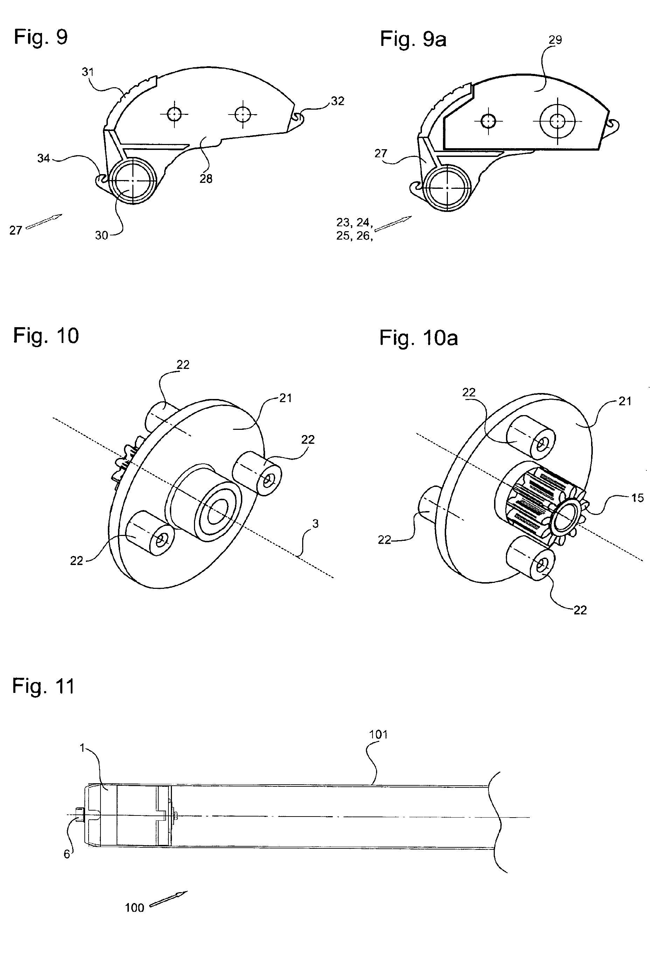

- Fig. 9: ein Bremssegmentgrundkörper eines erfindungsgemäßen Bremsrolleneinsatzes;
- Fig. 9a: ein Bremssegment eines erfindungsgemäßen Bremsrolleneinsatzes;
- Fig. 10: eine Bremssegmentaufnahmescheibe eines erfindungsgemäßen Bremsrolleneinsatzes;
- Fig. 10a: eine Bremssegmentaufnahmescheibe eines erfindungsgemäßen Bremsrolleneinsatzes (alternative Ansicht zu Fig. 10);
- Fig. 11: eine Bremsrolle in einer geschnittenen Ansicht;

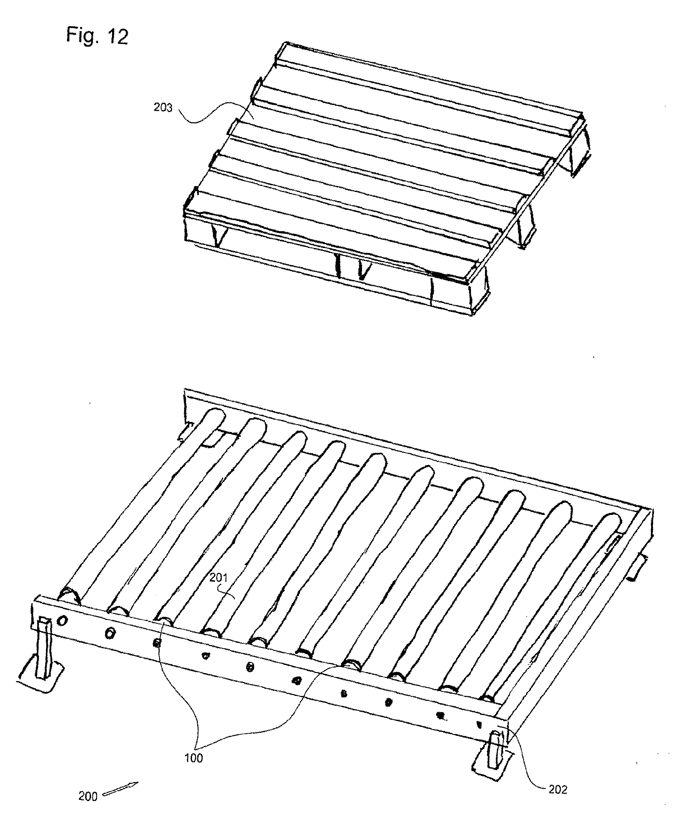

- Fig. 12: eine Rollenbahn mit Rollen und erfindungsgemäßen Bremsrollen.

### Es werden folgende Bezugszeichen verwendet:

- 1: Bremsrolleneinsatz
- 2: Trommelkörper
- 3: Achse (Zentralachse)
- 4: Getriebe, insbesondere Planetengetriebeanordnung
- 5: Bremseinrichtung
- 6: Anschluss (Achse)
- 7: Bremsfläche
- 8: Lager (Anschlussseite)
- 9: Planetenträger (der ersten Stufe)
- 10: Planetenräder (der ersten Stufe)
- 11: Sonnenrad (der ersten Stufe)
- 12: Hohlrad (der ersten Stufe)
- 13: Planetenträger (der zweiten Stufe)
- 14: Planetenräder (der zweiten Stufe)
- 15: Sonnenrad (der zweiten Stufe)
- 16: Hohlrad (der zweiten Stufe)
- 17: Lager
- 18: Deckel
- 19: Adapter-Buchse
- 20: Feststellschraube
- 21: Bremssegmentaufnahmescheibe
- 22: Zapfen
- 23: erstes Bremssegment
- 24: zweites Bremssegment
- 25: drittes Bremssegment
- 26: viertes Bremssegment
- 27: Bremssegmentgrundkörper
- 28: Aussparung für Fliehgewicht
- 29: Fliehgewicht
- 30: Zapfenanschluss
- 31: Bremsbacke
- 32: Federanschluss
- 33: Feder
- 34: Federanschluss (der Bremssegmentaufnahmescheibe)

- 100: Bremsrolle
- 101: hohlzylinderförmiger Rollenkörper

- 200: Rollenbahn
- 201: Rollen
- 202: Tragrahmen
- 203: Palette (Beispiel für Transportgut)

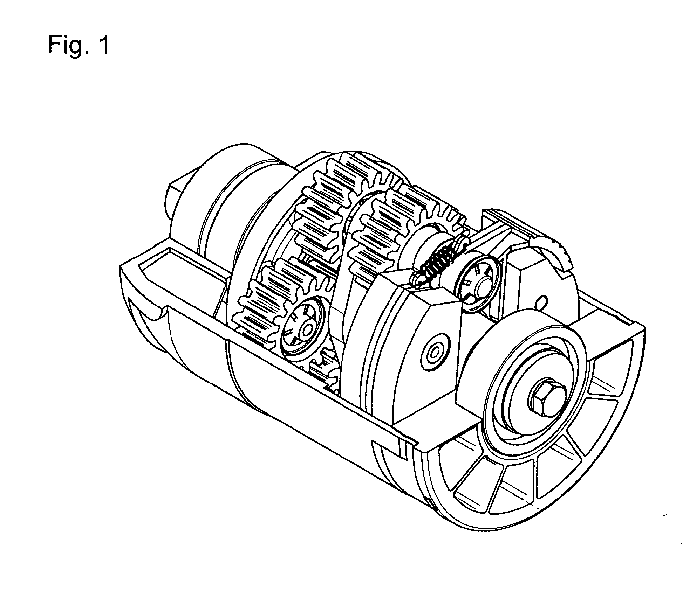

### Zunächst wird auf Fig. 1 Bezug genommen.

Ein Bremsrolleneinsatz 1 umfasst im Wesentlichen einen hohlzylinderförmigen Trommelkörper 2, eine Achse 3, ein Getriebe 4 und eine Bremseinrichtung 5.

Der Trommelkörper 2 ist hohlzylinderförmig ausgestaltet und mit einer umlaufenden Bremsfläche 7 ausgestattet. Ferner weist der Trommelkörper eine Innenverzahnung auf, die als Hohlrad für die noch näher zu beschreibenden Planetengetriebe dient. Der Trommelkörper 2 weist einseitig einen Lagersitz zur Aufnahme zweier Lager 8 auf. Auf der gegenüberliegenden Seite ist der Trommelkörper über einen Deckel 18 verschließbar.

Die Achse 3, das Getriebe 4 und die Bremseinrichtung 5 sind innerhalb des Trommelkörpers 2 angeordnet. Die Achse 3 weist einen Anschluss 6 auf, der auf der Seite der Lageraufnahme aus dem Trommelkörper 2 herausragt. Die Achse 3 ist auf beiden Seiten des Trommelkörpers 2 drehbar in Lagern 8, 15 aufgenommen, wobei das Lager 15 in dem Deckel 18 aufgenommen ist. Vorzugsweise sind auf Seiten des Anschlusses 6 der Achse 3 zwei einzelne Lager 8 vorgesehen. Es kommen vorzugsweise Kugellager als Lager in Frage.

Bei dem Getriebe handelt es sich in der hier vorgeschlagenen bevorzugten Ausführungsform um eine Kombination zweier hintereinandergeschalteter Planetengetriebe, vorzugsweise um ein erstes Planetengetriebe und ein zweites Planetengetriebe.

Das erste Planetengetriebe weist einen Planetenträger 9 auf, der fest mit der Achse 3 verbunden ist. Auf dem Planetenträger 9 sind Planetenräder 10, vorzugsweise vier Planetenräder 10, drehbar gelagert. Ferner weist das erste Planetengetriebe ein Sonnenrad 11 auf, welches mit den Planetenrädern 10 in Eingriff steht. Auch weist das erste Planetengetriebe ein Hohlrad 12 auf, welches aus dem Trommelkörper 2, insbesondere der Innenverzahnung des Trommelkörpers 2, gebildet wird. Das Sonnenrad 11 ist mit einem Planetenträger 13 des zweiten Planetengetriebes verbunden.

Das zweite Planetengetriebe weist den bereits genannten Planetenträger 13 auf, sowie eine Anzahl von Planetenrädern 14, vorzugsweise vier Planetenräder 14, und ein Sonnenrad 15. Die Planetenräder 14 sind drehbar auf dem Planetenträger 13 aufgenommen und greifen in das Sonnenrad 15 ein. Auch das zweite Planetengetriebe weist ein Hohlrad 16 auf, welches aus dem Trommelkörper 2, insbesondere der Innenverzahnung des Trommelkörpers 2, gebildet wird. Das Sonnenrad 15 des zweiten Planetengetriebes ist wiederum mit der Bremseinrichtung 5, insbesondere mit einer Bremssegmentaufnahmescheibe 21, der Bremseinrichtung 5 verbunden. Es kann vorteilhafterweise vorgesehen sein, dass die Planetenräder 14 des zweiten Planetengetriebes schmaler sind als die Planetenräder 10 des ersten Planetengetriebes. Auch kann vorteilhafterweise vorgesehen sein, dass vier Planetenräder 14 auf dem Planetenträger 13 des zweiten Planetengetriebes anstatt der üblichen zwei Planetenräder vorgesehen sind. Beide Maßnahme dienen einzeln oder in Kombination zur Reduzierung der Baulänge des Bremsrolleneinsatzes 1.

Die Bremseinrichtung 5, insbesondere die oben bereits genannte Bremssegmentaufnahmescheibe 21, weist vier Bremssegmente insbesondere ein erstes Bremssegment 23, ein zweites Bremssegment 24, ein drittes Bremssegment 25, sowie ein viertes Bremssegment 26 auf. Nachfolgend wird ein Bremssegment näher beschrieben, da alle vorgenannten Bremssegmente in einer bevorzugten Ausführungsform identisch aufgebaut sind.

Ein Bremssegment 23, 24, 25, 26 weist einen in etwa halbkreisförmigen Bremssegmentgrundkörper 27 und zwei Fliehgewichte 29 auf. Der Bremssegmentgrundkörper 27 weist zwei Aussparungen 28 für Fliehgewichte, einen Zapfenanschluss 30, eine Bremsbacke 31, einen Federanschluss 34 und einen Federanschluss 32 auf.

Bei dem Bremssegmentgrundkörper 27 handelt es sich im Wesentlichen um ein Kunststoffformteil, welches in einer Seitenansicht eine näherungsweise halbkreisförmige Gestalt aufweist. In Längsrichtung des Bremssegmentgrundkörpers 27 sind, in nachfolgender Reihenfolge, der Zapfenanschluss 30, die Bremsbacke 31, die Aussparungen 28 für die Fliehgewichte 29, und der Federanschluss 32 angeordnet. Der Zapfenanschluss 30 ist hier als Bohrung in dem Bremssegmentgrundkörper 27 ausgestaltet, welche die drehbare Aufnahme desselben auf einem Zapfen 22 der Bremssegmentaufnahmescheibe 21 ermöglicht. Die Ebene der Bremsbacke 31 ist insbesondere senkrecht zur Schwenkrichtung des Bremssegmentgrundkörpers 27 ausgerichtet, so dass die Bremsbacke 31 vorzugsweise plan auf der Bremsfläche 7 des Trommelkörpers 2 aufliegen kann. Vorzugsweise ist die Bremsbacke 31 leicht gewölbt, so dass eine optimale Anlage an die ebenfalls gewölbte, da in Umfangsrichtung verlaufende, Bremsfläche 7 des Trommelkörpers 2 gewährleistet werden kann. Die Aussparungen 28 sind beidseitig des Bremssegmentgrundkörpers 27 angeordnet um eine beidseitige Aufnahme der Fliehgewichte 29 zu ermöglichen. Die Fliehgewichte, vorzugsweise aus Blei oder einer Bleilegierung, sind in den Aussparungen 28 aufgenommen und vorzugsweise mit Befestigungsnieten befestigt. Der Federanschluss 32 ist als Haken oder Öse ausgestaltet, an der eine Feder, vorzugsweise eine Rückhalte-Zugfeder 33, insbesondere eine Schraubenfeder, befestigt werden kann. Die Rückhalte-Zugfeder 33 ist andererseits an einem Federanschluss 34 befestigt, der in der hier vorgeschlagenen bevorzugten Ausführungsform an einem anderen Bremssegment, insbesondere im Bereich des Zapfenanschlusses 30, vorgesehen ist. Grundsätzlich kann der Federanschluss 34 aber auch an der Bremssegmentaufnahmescheibe 21 selbst vorgesehen sein, solange die Rückhalte-Zugfeder 33 das Bremssegment gegen die Fliehkraft zurückziehen kann.

Die Bremssegmentaufnahmescheibe 21 ist als flache, kreisförmige Scheibe ausgestaltet und weist eine Mittelachse bzw. Drehachse auf, die mit der Achse 3 zusammenfällt. Ferner ist die Bremssegmentaufnahmescheibe 21 mit zwei Zapfen 22 auf der einen Seite und zwei Zapfen 22 auf der anderen Seite ausgestattet, die sich parallel zur Drehachse bzw. Mittelachse der Bremssegmentaufnahmescheibe 21 erstrecken. Auf jedem Zapfen 22 ist ein Bremssegment, insbesondere durch den Zapfenanschluss 30 des Bremssegments, drehbar aufgenommen. Als mögliche Lagerung der Bremssegmentaufnahmescheibe 21 kommen beispielsweise auch Nadelhülsen in Frage, wodurch eine Reduzierung der Anlaufreibung erreicht werden kann.

Die Schwenkrichtung ist in etwa senkrecht zur Achse 3 des Bremstrommeleinsatzes 1 ausgerichtet. Das Bremssegment ist damit grundsätzlich dazu eingerichtet, um den Zapfen 22 gedreht zu werden, wobei zur Anlenkung der Bremsbacken 31 an die Bremsfläche 7 des Trommelkörpers 2 nur relativ geringe Auslenkungen des Bremssegments benötigt werden.

Der vorgeschlagene Bremstrommeleinsatz ist ferner mit einer Adapter-Buchse 19 und einer Feststellschraube 20 ausgestattet. Die Adapter-Buchse 19 dient als Zwischenlager zwischen der Zentralachse 3 und dem Innenring des Kugellagers 17. Durch Festverschraubung der Feststellschraube 20 in der Zentralachse 3 wird die Adapter-Buchse 19 gegen Verschiebung nach außen gesichert und sichert damit auch eine Verschiebung des Kugellagers 17 nach außen.

Weitere Details ergeben sich aus einer Funktionsbeschreibung des erfindungsgemäßen Bremsrolleneinsatzes.

Der erfindungsgemäße Bremsrolleneinsatz 1 ist in der Regel in einem hohlzylinderförmigen Rollenkörper 101 einer Bremsrolle 100 einer Rollenbahn 200 aufgenommen. Die Rollenbahn 200 umfasst eine Anzahl von Rollen 201, Bremsrollen 100 und einen Tragrahmen 202, vorzugsweise einen in etwa rechteckförmigen Rahmen, in dem die Rollen 201 und Bremsrollen 100 parallel nebeneinander angeordnet sind. Die Achse 3 der Bremsrolle 100, insbesondere der Anschluss 6 der Achse 3, ist an dem Tragrahmen 201 festgelegt. Soweit beispielsweise eine Palette über die Rollenbahn 200 geschoben wird, werden die Rollen 201, als auch die Bremsrollen 100 in Drehung versetzt, wodurch wiederum der Trommelkörper 2 des Bremsrolleneinsatzes 1 in Drehung versetzt wird.

Der Trommelkörper 2 ist, zumindest im Bereich der Planetengetriebe, mit einer Innenverzahnung ausgestattet, in welche die Zähne der Planetenräder eingreifen können. Letztendlich bildet der Trommelkörper 2, insbesondere die Innenverzahnung des Trommelkörpers 2, das Hohlrad 12, 16 für beide Planetengetriebe. Durch das Einleiten einer Drehbewegung in die Bremsrolle 100, beispielsweise wenn eine Palette über die Rollenbahn 200, insbesondere die Bremsrolle 100 geschoben wird, wird die Drehbewegung auf den Trommelkörper 2 übertragen, der letztendlich die Planetenräder 10 des ersten Planetengetriebes und die Planetenräder 14 des zweiten Planetengetriebes antreibt. Mit der feststehenden Achse 3 und dem damit auch feststehenden Planetenträger 9 des ersten Planetengetriebes, wird das Sonnenrad 11 des ersten Planetengetriebes in Drehung versetzt. Das Sonnenrad 11 weist dabei eine entgegengesetzte Drehrichtung zum Hohlrad 12 bzw. dem Trommelkörper 2 auf.

In dem zweiten Planetengetriebe wird der Planetenträger 13 über das Sonnenrad 11 des ersten Planetengetriebes angetrieben. Ferner werden auch die Planetenräder 14 des zweiten Planetengetriebes durch den Trommelkörper 2 bzw. das Hohlrad 16 in Drehung versetzt. Letztendlich werden demnach sowohl der Planetenträger 13 als auch das Hohlrad 16 des zweiten Planetengetriebes angetrieben, so dass das Sonnenrad 15 des zweiten Planetengetriebes in Drehung versetzt wird und die Bremseinrichtung 5, insbesondere die Bremssegmentaufnahmescheibe 21, antreibt.

Letztendlich kommt es bei dem Getriebe darauf an, dass die Bremseinrichtung 5, insbesondere die Bremssegmentaufnahmescheibe 21, durch die Drehung des Trommelkörpers 2 gegenüber der Achse 3 in Drehung versetzt wird, wobei ein Übersetzungsgetriebe zwischen dem Trommelkörper 2 und der Bremseinrichtung 5, insbesondere die Bremssegmentaufnahmescheibe 21, vorgesehen sein sollte, damit für die Bremseinrichtung 5, insbesondere die Bremssegmentaufnahmescheibe 21, eine geeignete Drehgeschwindigkeit erreicht werden kann, die zur Auslenkung der Bremssegmente 23, 24, 25, 26 mittels Fliehkraft geeignet ist. In einer bevorzugten Ausgestaltung des Getriebes ist ein Übersetzungsverhältnis von 1:24 gewählt, d.h. die Bremseinrichtung 5, insbesondere die Bremssegmentaufnahmescheibe 21, vollzieht circa 24 Umdrehungen gegenüber einer Umdrehung des Trommelkörpers 2 und dies insbesondere in gegenläufiger Richtung. Insbesondere die der Bremseinrichtung 5 vorgeschaltete Planetengetriebeanordnung 4 dreht die Bremseinrichtung 5 entgegen der Drehung des Trommelkörpers 2.

Soweit die Bremseinrichtung 5, insbesondere die Bremssegmentaufnahmescheibe 21, wie oben beschrieben in Drehung versetzt wird, wirken Fliehkräfte auf die Bremssegmente 23, 24, 25, 26, insbesondere auf die Fliehgewichte 29, ein. Da die Bremssegmente drehbar an den Zapfen 22 aufgenommen sind, werden die Bremssegmente gegen die Rückstellkräfte der Rückhalte-Zugfedern 33 um den Zapfen 22 in Richtung des Trommelkörpers 2 bewegt und die Bremsbacke 31 drückt gegen die auf der Innenseite des Trommelkörpers 2 vorgesehene Bremsfläche 7, wodurch der Trommelkörper 2 letztendlich abgebremst wird. Es kommt hinzu, dass durch die Ausgestaltung des Getriebes die Drehrichtung von Bremssegmentaufnahmescheibe 21 und Trommelkörper 2 entgegengesetzt ist, wodurch die Drehgeschwindigkeit sehr effektiv verringert werden kann. Die Bremssegmente befinden sich in der oben bereits skizzierten zweiten Position.

Fällt die Drehgeschwindigkeit unter eine vorgegebene Drehzahl, ist die Fliehkraft nicht mehr ausreichend und das Bremssegment bzw. die Bremssegmente werden durch die Rückhalte-Zugfedern 33 zurückgezogen. Die Bremssegmente befinden sich in der oben bereits skizzierten ersten Position. Die Rückhalte-Zugfedern 33 kann hierzu, neben ihrer Befestigung an dem Federanschluss des Bremssegments, an dem Zapfenanschluss eines anderen Bremssegmentes befestigt sein. Die Rückhalte-Zugfeder 33 kann aber auch an anderer Stelle befestigt sein, solange sie das jeweilige Bremssegment gegen die Fliehkraft der Fliehgewichte 29 zurückzieht.

Da die ausgeübte Bremskraft der Bremsbacken 31 auf die Bremsfläche 7 des Trommelkörpers 2 von der auf die Fliehgewichte 29 einwirkende Fliehkraft abhängig ist, die wiederum von der Drehzahl der Bremssegmentaufnahmescheibe 21 abhängig ist, kann eine von der Bremsrollendrehzahl abhängige Bremswirkung durch den Bremsrolleneinsatz 1 erzeugt werden. Dies ermöglicht ein Abbremsen einer auf einer Rollenbahn bewegten Palette bis auf eine vorgesehene Geschwindigkeit, da die Bremswirkung der Bremsrolle ab dem Unterschreiten einer vorgegebenen Drehgeschwindigkeit aufgehoben wird. In diesem Fall ist die Fliehkraft nicht mehr ausreichend, die Bremsbacken 31 gegen die Rückstellkraft der Rückhalte-Zugfedern 33 gegen die Bremsfläche 7 zu drücken, so dass die Palette mit der vorgesehenen Geschwindigkeit auf der Rollenbahn 200 weitertransportiert werden kann. Wird die Palette wieder schneller, setzt erneut die Bremswirkung der Bremsrolle 100 ein.

Als Material für den Trommelkörper 2, die Planetenräder 10, 14, Sonnenräder 11, 15 und Planetenträger 9, 13, als auch für die Bremssegmentgrundkörper 27 und die Bremssegmentaufnahmescheibe 21 kommen vorzugsweise Kunststoffe in Frage. Die Achse 3 ist vorzugsweise aus Stahl gefertigt.

In der hier vorgeschlagenen bevorzugten Ausführungsform sind als Getriebe zwei in Reihe geschaltete Planetengetriebe vorgesehen, die für eine entsprechende Übersetzung der über den Trommelkörper 2 eingeleiteten Drehbewegung auf die Bremseinrichtung 5 zuständig sind. Es ist einsichtig, dass hier jedes Getriebe zum Einsatz kommen kann, welches die vorgenannten Anforderungen erfüllt. Die hier vorgeschlagenen in Reihe geschalteten Planetengetriebe zeichnen sich jedoch durch eine angemessen hohe Übersetzung bei sehr geringem Raumbedarf aus, so dass der Bremstrommeleinsatz 1 insgesamt sehr kompakt aufgebaut sein kann.

Es kann ebenfalls vorgesehen sein, dass die Bremsrolle 100 insoweit einteilig aufgebaut ist, als dass der Trommelkörper 2 unmittelbar von dem hohlzylinderförmigen Rollenkörper 101 der Bremsrolle 100 gebildet wird.

## Patentansprüche

1. Bremsrolleneinsatz (1), insbesondere für eine Bremsrolle einer Rollenbahn, umfassend
- einen hohlzylinderförmigen Trommelkörper (2), eine Bremseinrichtung (5), ein Getriebe und eine Achse (6), wobei
- der Trommelkörper (2) dazu eingerichtet ist, um die Achse (3) zu rotieren, wobei
- das Getriebe dazu eingerichtet ist, die Bremseinrichtung (5) durch die Drehbewegung des Trommelkörpers (2) anzutreiben, wobei
- die Bremseinrichtung (5) dazu eingerichtet ist, die Drehbewegung zwischen Trommelkörper (2) und Achse (3) in Abhängigkeit von der Drehzahl zwischen Trommelkörper (2) und Achse (3) zu verzögern, wobei
- die Bremseinrichtung (5) mit Bremssegmenten ausgestattet ist, die dazu eingerichtet sind, unter dem Einfluss von Fliehkraft mit dem Trommelkörper (2) in Kontakt zu treten,
**dadurch gekennzeichnet, dass**
mindestens drei, vorzugsweise vier, Bremssegmente (23, 24, 25, 26) vorgesehen sind.

2. Bremsrolleneinsatz nach Anspruch 1, **dadurch gekennzeichnet, dass** der Trommelkörper (2) innenseitig eine Bremsfläche (7) aufweist, mit der die Bremssegmente in Kontakt treten können.

3. Bremsrolleneinsatz nach einem der vorhergehenden Ansprüche, **dadurch gekennzeichnet, dass** die Bremseinrichtung mit einer kreisförmigen flachen Bremssegmentaufnahmescheibe (21) ausgestattet ist, die um die Achse (3) rotieren kann, wobei die Bremssegmente derart bewegbar auf der Bremssegmentaufnahmescheibe (21) angebracht sind, dass sie mindestens eine erste Position einnehmen können, bei der die Bremssegmente nicht mit dem Trommelkörper (2), insbesondere der Bremsfläche (7), in Kontakt treten können, wobei die Bremssegmente eine zweite Position einnehmen können, bei der die Bremssegmente mit dem Trommelkörper (2), insbesondere der Bremsfläche (7), zur Erzielung einer Bremswirkung in Kontakt treten können.

4. Bremsrolleneinsatz nach Anspruch 3, **dadurch gekennzeichnet, dass** mindestens vier Zapfen (22) auf der Bremssegmentaufnahmescheibe (21) angebracht sind, wobei die Zapfen parallel zur Achse (3) ausgerichtet sind, wobei die Bremssegmente (23, 24, 25, 26) drehbar an den Zapfen (21) aufgenommen sind.

5. Bremsrolleneinsatz nach einem der Ansprüche 3 oder 4, **dadurch gekennzeichnet, dass** jeweils mindestens zwei Bremssegmente (23, 24) auf der einen Seite der Bremssegmentaufnahmescheibe (21) angebracht sind, wobei jeweils mindestens zwei Bremssegmente (25, 26) auf der gegenüberliegenden Seite des Bremssegmentaufnahmescheibe (21) angebracht sind.

6. Bremsrolleneinsatz nach einem der Ansprüche 3 bis 5, **dadurch gekennzeichnet, dass** die Zapfen (22) derart auf der Bremssegmentaufnahmescheibe (21) angebracht sind, dass in Umfangsrichtung alle 90 Grad ein Zapfen (22) angebracht ist, wobei um 90 Grad versetzte Zapfen (22) auf gegenüberliegenden Seiten der Bremssegmentaufnahmescheibe (21) angebracht sind.

7. Bremsrolleneinsatz nach einem der vorhergehenden Ansprüche, **dadurch gekennzeichnet, dass** es sich bei dem Getriebe um mindestens ein Planetengetriebe, vorzugsweise um eine Planetengetriebeanordnung aus zwei oder mehr Planetengetrieben, handelt.

8. Bremsrolleneinsatz nach Anspruch 7, **dadurch gekennzeichnet, dass** es sich bei der Planetengetriebeanordnung um ein erstes Planetengetriebe und ein zweites Planetengetriebe handelt, wobei das erste Planetengetriebe einen Planetenträger (9), eine Anzahl von Planetenrädern (10), ein Sonnenrad (11) und ein Hohlrad (12) aufweist, wobei das zweite Planetengetriebe einen Planetenträger (13), eine Anzahl von Planetenrädern (14), ein Sonnenrad (15) und ein Hohlrad (16) aufweist, wobei der erste Planetenträger (9) mit der Achse (3) verbunden ist, wobei das Sonnenrad (11) des ersten Planetengetriebes mit dem Planetenträger (13) des zweiten Planetengetriebes verbunden ist, wobei das Hohlrad (12) des ersten Planetengetriebes mit dem Trommelkörper (2) verbunden ist, insbesondere aus dem Trommelkörper (2) gebildet wird, wobei das Hohlrad (16) des zweiten Planetengetriebes mit dem Trommelkörper (2) verbunden ist, insbesondere aus dem Trommelkörper (2) gebildet wird, wobei das Sonnenrad (15) des zweiten Planetengetriebes mit der Bremseinrichtung (5) verbunden ist.

9. Bremsrolleneinsatz nach einem der Ansprüche 7 oder 8, **dadurch gekennzeichnet, dass** der Trommelkörper mit einer Innenverzahnung ausgestattet ist, welche sowohl das Hohlrad (12) des ersten Planetengetriebes, als auch das Hohlrad (16) des zweiten Planetengetriebes bildet.

10. Bremsrolleneinsatz nach einem der vorhergehenden Ansprüche, **dadurch gekennzeichnet, dass** das Bremssegment einen Bremssegmentgrundkörper (27) aufweist, wobei der Bremssegmentgrundkörper (27) einen Zapfenanschluss (30) aufweist, der zur drehbaren Aufnahme eines Bremssegmentes auf einem Zapfen (22) der Bremssegmentaufnahmescheibe (21) eingerichtet ist, wobei der Bremssegmentgrundkörper (27) mit mindestens einer Bremsbacke (31) ausgestattet ist, die mit dem Trommelkörper (2), insbesondere einer Bremsfläche (7) des Trommelkörpers (2), zur Erzielung einer Bremswirkung in Kontakt treten kann, wobei der Bremssegmentgrundkörper (27) mindestens eine Aussparung (28), vorzugsweise zwei Aussparungen (28) auf jeder Seite des Bremssegmentgrundkörpers (27), zur Aufnahme von Fliehgewichten (29) aufweist, wobei ein Fliehgewicht (29) in der Aussparung (28) aufgenommen ist, wobei der Bremssegmentgrundkörper (27) mit einem Federanschluss (32) ausgestattet ist, der zum Anschluss einer Rückhalte-Zugfeder (33) eingerichtet ist.

11. Bremsrolleneinsatz nach Anspruch 10, **dadurch gekennzeichnet, dass** die Bremsfläche (7) näher an dem Zapfenanschluss (30) angeordnet ist, als die mindestens eine Aussparung (28), wobei der Federanschluss (32) auf der dem Zapfenanschluss (30) gegenüberliegenden Ende des Bremssegmentgrundkörpers (27) vorgesehen ist.

12. Bremsrolleneinsatz nach einem der Ansprüche 10 oder 11, **dadurch gekennzeichnet, dass** eine Rückhalte-Zugfeder (33) zwischen dem Federanschluss (32) und der Bremssegmentaufnahmescheibe (21), vorzugsweise zwischen einem Federanschluss (32) und einem Zapfen (22), vorgesehen ist.

13. Bremsrolleneinsatz nach einem der Ansprüche 7 bis 12, **dadurch gekennzeichnet, dass** die Planetenräder (10) des zweiten Planetengetriebes schmaler ausgestaltet sind, als die Planetenräder (14) des ersten Planetengetriebes.

14. Bremsrolle (100) für eine Rollenbahn (200), umfassend einen Bremsrolleneinsatz (1) und einen hohlzylinderförmigen Rollenkörper (101), **dadurch gekennzeichnet, dass** es sich bei dem Bremsrolleneinsatz um einen Bremsrolleneinsatz (1) gemäß einem der Ansprüche 1 bis 13 handelt.

15. Rollenbahn (200) zum Transport von Transportgut, insbesondere von Paletten oder Containern, umfassend einen Rollenrahmen (202), in dem mindestens eine Bremsrolle aufgenommen ist, **dadurch gekennzeichnet, dass** es sich um eine Bremsrolle (100) gemäß Anspruch 14 handelt.
